# EUROPEAN PATENT SPECIFICATION

(11) **EP 3 863 410 B1**
(45) Date of publication and mention of the grant of the patent: **15.06.2022**
(21) Application number: 20725966.4
(22) Date of filing: 06.05.2020
(51) Int. Cl.: A23B 7/16, A23B 7/154, A23B 7/157, A23B 9/14, A23B 9/26, A23B 9/30, A01N 3/02

(54) **EDIBLE COATING COMPOSITION FOR COATING FRESH HARVEST PRODUCTS**
ESSBARE BESCHICHTUNGSZUSAMMENSETZUNG ZUR BESCHICHTUNG VON FRISCH GEERNTETEN PRODUKTEN
COMPOSITION DE REVÊTEMENT COMESTIBLE POUR LE REVÊTEMENT DE PRODUITS DE RÉCOLTE FRAIS

(30) Priority: 06.05.2019 EP 19172838
(43) Date of publication of application: 18.08.2021
(73) Proprietor: Liquidseal Holding B.V., 2316 XG Leiden (NL)
(72) Inventor: MONSTER, Victor Steven, 2316 XG Leiden (NL); VAN DEN BERG, Eugene Robert, 2316 XG Leiden (NL); GROENEWEGEN, Glenn Gareth, 2316 XG Leiden (NL)
(74) Representative: van Dam, Vincent
(86) International application number: PCT/NL2020/050290
(87) International publication number: WO 2020/226495

(56) References cited:
- WO-A1-2016/084094
- WO-A1-2018/009846
- WO-A1-2018/144482
- CN-A- 108 208 153
- US-A- 2 183 981
- BALDWIN E A ET AL: "USE OF LIPIDS IN COATINGS FOR FOOD PRODUCTS", FOOD TECHNOLOGY, INSTITUTE OF FOOD TECHNOLOGISTS, CHICAGO, IL, US, vol. 51, no. 6, 1 June 1997 (1997-06-01), pages 56-62, 64, XP000657049, ISSN: 0015-6639

## Description

The present invention relates to an edible composition for coating fresh harvest products according to claim 1. The invention also relates to a method for coating an harvest product according to claim 13. In addition, the invention relates to the use of said edible composition for the preparation of a post-harvest fruit or vegetable item with prolonged shelf life and/or slower weight loss according to claim 14 and to the use of said edible composition for the preparation of a post-harvest cut flower with prolonged vase life according to claim 15.

Edible coatings have been employed for harvest products since a long time and are in particular used to extend the shelf-life of fruits.

For instance, monoglycerides have been proven useful in edible compositions for coating fruit and vegetables.

CN 108 208 153 A discloses a weak alkali fruit cleaning and fresh keeping waxing agent.

US 2 183 981 A discloses a method and material for treating fruit.

WO 2018/009846 A1 discloses methods for controlling the rate of ripening for agricultural produce and coating compositions that can be applied to produce to control (e.g., lessen) the rate of ripening of the produce.

WO 2016/084094 A1 discloses edible morpholine-free coating formulations and methods for reducing the weight loss and improving the shelf life of post-harvest edible and non-edible plant matter.

Baldwin E.A. et al., FOOD TECHNOLOGY, INSTITUTE OF FOOD TECHNOLOGISTS CHICAGOI, IL, US, vol. 51, no.6, 1 June 1997, pages 56-62 disclose the use of lipids in coatings for food products.

The inventors have found that there is still a need for improvement. In particular the present invention aims at the provision of an easy-to-prepare, cost effective coating composition for coating fresh harvest products, which has excellent properties with respect to extending shelf / vase life and slowing down of weight loss.

### Summary of the invention

In a first aspect the present invention relates to an edible composition according to claim 1.

In a second aspect the invention relates to a method for coating a fresh harvest product comprising applying post-harvest to said harvest product the composition of the first aspect of the invention.

In a third aspect the invention relates to the use of the composition according to the first aspect, for the preparation of a post-harvest fruit or vegetable item with prolonged shelf life and/or slower weight loss compared to a fruit or vegetable item which is not coated with said composition.

In a fourth aspect the invention relates to the use of the composition according to the first aspect, for the preparation of a post-harvest cut flower or potted plant with prolonged vase life when coated with said composition compared to a comparable cut flower which is not coated with said composition.

### Short description of the drawings

Fig.1 shows a graph depicting weight loss in time of bananas coated with a composition according to the invention (continuous line) compared to uncoated bananas (dotted line).
Fig.2 shows a graph depicting weight loss in time of melons coated with a composition according to the invention (continuous line) compared to uncoated melons (dotted line).
Fig.3 shows a graph depicting weight loss in time of cucumbers coated with a composition according to the invention (continuous line) compared to uncoated cucumbers (dotted line).
Fig.4 shows a graph depicting weight loss in time of cucumbers coated with another composition according to the invention (continuous line) compared to uncoated cucumbers (dotted line).
Fig.5 shows a graph depicting weight loss in time of apples coated with a composition according to the invention (continuous line) compared to uncoated apples (dotted line).
Fig.6 shows a graph depicting weight loss in time of pears coated with a composition according to the invention (continuous line) compared to uncoated pears (dotted line) .
Fig. 7 shows a graph depicting weight loss in time of melons coated with a number of different compositions according to the invention (continuous lines) compared to uncoated melons (dotted line).
Fig. 8 shows a graph depicting weight loss in time of oranges coated with a number of different compositions according to the invention (dotted lines) compared to uncoated oranges (continuous line).
Fig. 9 shows a graph depicting weight loss in time of oranges coated with a number of different compositions according to the invention (dotted lines) compared to uncoated oranges (continuous line).
Fig. 10 shows a graph depicting weight loss in time of oranges coated with a number of different compositions according to the invention (dotted lines) compared to uncoated oranges (continuous line).
Fig. 11 shows a graph depicting weight loss in time of avocados coated with a number of different compositions according to the invention (dotted lines) compared to uncoated avocados (continuous line).

### Detailed description of the invention

The present invention is based on the finding that shelf life of fresh harvest products can be extended by coating these products with a composition in the form of a aqueous emulsion in accordance with claim 1. The inventors have observed that the combination of monoglyceride with fatty acids and alkaline agents in water leads to a stable emulsion which, when applied to fresh harvest products, leads to a significant slowing down of weight loss of said products. Accordingly, the products have an extended shelf life. The emulsion may be in the form of an ordinary emulsion or in the form of a micro-emulsion, depending on the ingredients. The emulsion may suitably be in the form of an anionic emulsion, because this results in good interaction with the surface of the fresh harvest product.

Without wishing to be bound to a theory the inventors believe that the combination of these fatty acids and monoglyceride leads to the formation of micelles which are a bit more unstable compared to for instance micelles formed exclusively of monoglyceride, while the alkaline agent on its turn charges the fatty acid head group, thus producing a sphere of charge about the micelles, which on its turn stabilizes the emulsion by electrostatic repulsion and prevents aggregation of the micelles so that a stable micro-emulsion can be formed. The inventors believe that because the micelles are prevented from aggregation in the emulsion while they are on the other hand a bit unstable because of the presence of the fatty acids therein has the effect that when the micelles come into contact with the surface of the fresh harvest products, interaction will take place more efficiently and uniformly because the product in general has a somewhat fatty surface, so that an even coating is achieved which interacts well with the surface of the fresh harvest product.

The composition comprises monoglyceride. Monoglycerides (which are also referred to as acylglycerols or monoacylglycerols) are a class of glycerides which are composed of a molecule of glycerol linked to a fatty acid via an ester bond. There are two different main types of monoglycerides: 1-monoacylglycerols wherein the fatty acid is attached to a primary alcohol to form the monoacylglycerol, or 2-monoacylglycerols wherein the fatty acid is attached to the secondary alcohol to form the monoacylglycerol. A diglyceride, (diacylglycerol (DAG)), is a glyceride consisting of two fatty acid chains covalently bonded to a glycerol molecule through ester linkages. Two main forms exist, namely 1,2-diacylglycerols and 1,3-diacylglycerols.

In the composition according to the invention said monoglyceride has chains with a chain length of 12 to 20 carbon atoms. Such as 14 to 20 or 16 to 20 carbon atoms. The use of these molecules in the composition according to the invention results in coatings which are well capable to confer longer shelf life to fresh harvest products. Such chains include laurate, myristate, oleate, palmitate and stearate chains. Such molecules are well characterized, harmless for health and commercially available. It is therefore preferred that said monoglyceride has chains selected from the group of laurate chain, oleate chain, palmitate chain and stearate chain.

A highly preferred monoglyceride for use in the composition of the invention is glycerol monostearate. Inclusion of this compound in the composition results in excellent results regarding decreased weight loss as evidenced in the examples below. Moreover, glycerol monostearate is available in bulk because it can be recovered directly from vegetable sources such as rapeseed, oil palm, etc. In this respect it is preferred that the monoglyceride portion in the composition is formed predominantly from glycerol monostearate. For instance, a suitable source of glycerol monostearate may be a mixture of 90 mol% 1- and 2-glyceryl monostearate and 10 mol% C16-C18 even numbered monoglyceride material, which is commercially available.

The composition may comprise one particular monoglyceride. It is also possible that the composition comprises multiple different monoglycerides with different chains. The composition may comprise one particular monoglyceride (such as 1- or 2-glyceryl monostearate) or multiple monoglycerides (such as 1- and 2-glyceryl monostearate) while not containing diglycerides.

The monoglycerides, such as for instance 1- and/or 2-glyceryl monostearate, are comprised in the composition according to the invention in a concentration of 1-10 w/v%based on the volume of the composition. By way of example, the monoglycerides may be suitably comprised in the composition according to the invention in a concentration of 5 w/v% based on the volume of the composition.

The composition according to the invention also comprises one or more fatty acids. Fatty acids as referred to in this application are compounds of the general structure R-COOH where R represents a long hydrocarbon chainThe fatty acids used in the composition of the invention are selected from medium chain fatty acids (MCFA) having aliphatic tails of 12 carbon atoms, and long-chain fatty acids (LCFA) having aliphatic tails of 13 to 21 carbons. It is preferred that the fatty acids have melting point of lower than or equal to that of the monoglyceride in the composition because this enhances stability of the emulsion, while on the other hand efficient and uniform coating of the fresh harvest products is obtained. For the same reason, because the coating composition will in general be applied at room temperature (i.e. around 15 to 30°C, depending on the climate), it is preferred that said one or more fatty acids are in liquid state at room temperature, at least when they are in an eutectic mixture, such as may be the case in the compositions according to the invention.

Fatty acids may include without limitation saturated and unsaturated fatty acids. The term fatty acids in this application is also meant to encompass esters or ethers of fatty acids, which contain a fatty acid moiety.

Saturated fatty acids have no C=C double bonds and have the general formula CH₃(CH₂)nCOOH, wherein "n" is a variable integer. Unsaturated fatty acids have one or more C=C double bonds. The C=C double bonds can give either cis or trans isomers. Although for purposes of the invention it both cis and trans isomers will work, it is preferred to use cis isomers, because these are found in nature and can be purified easily from natural, in particular vegetable, sources.

Unsaturated fatty acids may for instance include, without limitation, α-linolenic acid, stearidonic acid, eicosapentaenoic acid, linoleic acid, linolelaidic acid, γ-linolenic acid, dihomo-γ-linolenic acid, arachidonic acid, eicosatetraenoic acid, palmitoleic acid, vaccenic acid, paullinic acid, oleic acid, elaidic acid, gondoic acid, and mead acid.

Saturated fatty acids include, without limitation, caprylic acid, capric acid, lauric acid, myristic acid, palmitic acid, stearic acid, arachidic acid and behenic acid.

Highly preferred fatty acids in this respect are C18 fatty acids, sorbate fatty acids and sucroglycerides. It is therefore preferred that the composition comprises one or more C18 fatty acids, such as C18, C18:1, C18:2, C18:3, for instance oleic acid, or a mixture thereof; and/or sorbate fatty acids, such sorbitan monoleate, including polysorbate 80, 65 or 60; and/or sucroglycerides. Further preferred compounds comprise sucrose esters of fatty acids, polyglycerol fatty acid esters, polypropylene fatty acid esters, glycerol soya fatty acid esters, poly glycerol polyricinoleate. Examples of food grade fatty acids are assigned with E-numbers E473- 478 and E480-482.

It is highly preferred that said one or more fatty acids comprise one or more C18 fatty acids selected from the group of C18, C18:1, C18:2, C18:3 fatty acids or mixtures thereof, preferably oleic acid, because these fatty acids combined with glycerol monostearate show excellent results with respect to extended shelf life and reduction of weight loss of the produce coated with the composition according to the invention.

In preferred embodiment a combination of oleic acid and palmitic acid is used. This results in advantageous effects with respect to the shelf life of produce. Moreover, the use of palmitic acid contributed to the stability of the emulsion.

The fatty acids, such as for instance oleic acid are comprised in the composition according to the invention in a concentration of 1-5 % w/v w/v based on the volume of the composition. By way of example, the fatty acids, such as oleic acid, may be suitably comprised in the composition according to the invention in a concentration of 3 % w/v based on the volume of the composition.

The composition also comprises one or more alkaline agents (i.e. bases,), preferably strong or moderate bases, for maintaining said monoglyceride in a stable emulsion. Various bases can be used for this purpose as long as they are capable to create the electrostatic repulsion between the micelles in the composition. Very suitable compositions may be obtained by dissolving NaOH, KOH, morpholine, ammonium hydroxide ammonium(bi)carbonate or ammonia, sodium bicarbonate, potassium bicarbonate, or ammonium chloride. It is preferred that the alkaline agent evaporates after application of the composition onto the fresh harvest product, i.e. at room temperature (15-30 °C). Upon evaporation the emulsion become unstable again and the micelles will interact efficiently with the fatty surfaces of the harvest product. In a preferred embodiment the dissolved agent is ammonia because this agent evaporates readily after application of the coating without leaving any trace, scent or taste effects.

These alkaline agents are added in a total amount of 0,10-10%, such as 1-10 w/v%, for instance approximately 3 or 4% w/v of the emulsion. If ammonia is used it is preferably added in a concentration between 0,10-10%w/v based on the volume of the composition, such as 1-10 w/v%, for instance approximately 3 or 4%.

In an exemplary and preferred embodiment ammonia is in combination with oleic acid and glycerol monostearate, with ammonia in a concentration between 0,10-10 % w/v based on the volume of the composition, such as 1-10 w/v%, for instance approximately 3 or 4%.

The composition may comprise said mono-glyceride(s), said fatty acid(s) and alkaline agents in water as an aqueous emulsion without further additives. It is also possible that further additives are used. However it is highly preferred that because the composition of the invention is an edible coating, all components are food grade or even food approved.

The percentage of further additives than said monoglyceride(s), said fatty acid(s) and alkaline agents and said water preferably does not exceed 10 % w/v of the emulsion, such as 5 % w/v or less.

In this respect, a preferred additive in the composition is a spacing agent. The presence of this spacing agent is necessary to provide channels (spaces) for diffusion of metabolic gases, allowing a minimal continued metabolism and maturation of the fresh harvest product within the coating, so that in particular in case of coating fruit with the composition according to the invention the taste of the fruit is not adversely impacted.

The spacing agent may be present in an amount between 0,001 and 10,0 % w/v based on the volume of the composition, such as between 0,01 and 10 % w/v, such as approximately 0,1 % w/v based on the volume of the composition. Particularly useful compositions may comprise spacing agent between 0,05 and 0,5 %, such as 0,1 % w/v based on the volume of the composition. With these concentrations a minimal continued metabolism and maturation of the fresh harvest product within the coating is ensured. This is in particular important in case of coated fruit so that the taste of the fruit is not adversely impacted, while on the other hand decreased weight loss are achieved. These low concentrations of spacing agent also contribute to reduced stickiness of the coatings when applied on the fresh harvest product.

It is preferred that said spacing agent is a polyol, such as a diol or a triol. Inclusion of polyols in the composition reduces stickiness of coatings compared to other spacing agents described in the art such as starch. Suitable polyols include glycols and polyethers. Suitable polyols may be selected from the group of glycerol, sorbitol, propylene glycol, polyethylene glycol (polyethylene oxide) or mixtures thereof. Preferably said spacing agent is glycerol. Glycerol may be present in an amount between 0,001 and 10 % w/v based on the volume of the composition, such as between 0,01 and 10 % w/v. Suitable glycerol amounts may be in the range of between 0,005 and 0,75 %, between 0,005 and 0,5 %, between 0,01 to 1,0 %, between 0,01 and 0,75 % or between 0,01 and 0,5 % w/v based on the volume of the composition. Particularly useful compositions may comprise glycerol in an amount of 0,1 % w/v of glycerol based on the volume of the composition. In particular when fruit is coated, with these concentrations a minimal continued metabolism and maturation of the fruit item within the coating is ensured, so that taste of the fruit is not adversely impacted. On the other hand increased gloss and decreased weight loss are achieved. A further advantage of having glycerol in the composition in these concentrations is that the coating remains intact even a high relative humidity. These low concentrations of glycerol also contribute to reduced stickiness of the coatings when applied on fresh harvest product.

In a preferred embodiment hereof the composition comprises glycerol monostearate in an amount of 1-10% w/v of the emulsion; oleic acid as a fatty acid in an amount of 1-5% w/v of the emulsion; an alkaline agent in an amount of 1-10% w/v of the emulsion, the balance being water.

In a further preferred embodiment the composition comprises glycerol monostearate in an amount of 1-10% w/v of the emulsion; oleic acid as a fatty acid in an amount of 1-5% w/v of the emulsion; ammonia as an alkaline agent in an amount of 0,1-10% w/v of the emulsion, the balance being water. Optionally in this embodiment, ammonia and KOH/or NaOH, preferably KOH, may be used in combination with ammonia in a preferred total amount of 1-10 % w/v of the emulsion.

In a still further embodiment the composition comprises glycerol monostearate in an amount of 1-10% w/v of the emulsion; oleic acid as fatty acid in an amount of 1-5% w/v of the emulsion; glycerol as spacing agent in an amount of 0,01-10% w/v of the emulsion; ammonia as alkaline agent in an amount of 0,1-10% w/v of the emulsion, the balance being water. Optionally in this embodiment, ammonia and KOH/or NaOH, preferably KOH, may be used in combination with ammonia in a preferred total amount of 1-10 % w/v of the emulsion.

Such compositions result in very high decrease of weight loss and long shelf life of the coated produce.

In principle the basis of the composition of the invention is water and the composition is in the form of an aqueous emulsion. However, it is also possible to use organic solvents to a limited extent, for instance as an aid to dissolve other additives. Examples of such solvents may for instance be ethanol or ethyl acetate. Nevertheless, the amount of organic solvent in the composition according to the invention should be limited to a minimum. It is therefore preferred that the composition according the invention is free of organic solvents or that it comprises organic solvent in a percentage of less than 5 % w/v of the emulsion.

A further preferred additive is lecithin. The inventors have surprisingly found that the addition of lecithin allows higher concentration of the composition. Moreover, the inventors have observed that the addition of lecithin allows to lower the amount of ammonia in the composition, which is advantageous in terms of odour. This allows the composition to be made and sold as a concentrate, which can be brought to the desired dilution by the end user. Lecithin is preferably added in a concentration of < 10 % w/v based on the volume of the composition. Preferred concentrations of lecithin range from 0,1 - 5 w/v based on the volume of the composition, such as 1 % w/v based on the volume of the composition. Lecithin may be added for instance with or without polyglycerol polyricinoleate, wherein the latter lowers viscosity.

As an alternative or in addition to lecithin, ammonium phosphatides may be used. Also these compounds aid in obtaining a higher concentration of the composition.

It may further be preferred to add an ionic agent in the form of a salt, such as KCl or NaCl. This contributes to stability of an ionic emulsion.

It may further be preferred to add an anti-foam agent to the composition. The inventors have surprisingly found that the addition of an anti-foam agent has advantageous effects on shelf life of harvest products, and in particular fruit. A preferred anti-foam agent comprises polydimethylsiloxane. A very suitable anti-foam agent is a composition that contains dimethylpolysiloxane, silicon dioxide, and emulsifiers and preservatives for instance the Magrabar^{®} products from Münzing. Non-limiting examples include Magrabar^{®}3303 which contains soybean oil, organic wax, vegetable oil and silicon dioxide, Magrabar^{®} PD-602E which contains vegetable based surface-active agents, vegetable oils and hydrophobic silica, Münzing agitan351, which is a blend of modified fatty and alkoxylated compounds, silica and emulsifiers (nonionic), Munzing agitan352, which is a blend of vegetable oils and alkoxylated compounds, silica and emulsifiers (nonionic), and polydimethylsiloxane. Anti-foam agents are preferably added in a concentration of < 10 % w/v based on the volume of the composition. Preferred concentrations of anti-foam agent range from 0,1- 5 w/v based on the volume of the composition, such as 0,5 or 1 % w/v based on the volume of the composition. Surprisingly, the inventors have observed a positive effect of the addition of an anti-foam agent on the shelf life of produce, in particular fruit.

It may be preferred to add a salt such as NaCl or KCl as well in case an anti-foam agent is added.

The composition according to the invention may further comprise additives in the form of bioresins, polymers, biopolymers, lipids, such as phospholipids, waxes, antioxidants, acids, starches, sugars, minerals, natural extracts, preservatives, hormones, antifungals, antibacterials, cytokines, fillers, film formers, surfactants, organic material.

It is also possible to use di/triglycerides which are liquid at room temperature (i.e. 15 to 30 °C). These include common oils, such as vegetable oils. For example, salad oil, peanut oil, olive oil, soy oil, or triglyceride type oils may be added. By the addition of an oil the composition will be an O/W emulsion. An exemplary composition of the invention which includes oil may comprise GMS, oleic acid, ammonia and oil, for instance 5% GMS, 3% oleic acid, 5% ammonia and 5% oil (w/v based on the volume of the composition.

Further emulsifying agents may also be added such as for example sorbitan esters, polysorbates (ethoxylated sorbitan esters), acetylated monoglycerides, fatty alcohols, ethoxylated alcohols, ethoxylated fatty acids, ethoxylated lanolin, sarcosins / sarcosinates, etc.

Examples of food approved additives are listed in Table 1 below (amounts of >10 % w/v are not according to the invention):

**Table 1: list of possible food approved additives for use in the composition of the invention.**

| Product | Category | Function in the composition | Amounts are w/v based on the volume of the composition | | |
|---|---|---|---|---|---|
| | | | Exemplary concentration (w/v %) | Preferred concentratio n range. (w/v %) | Range (w/v %) |
| Shellac | Bioresin | Coating, water barrier, gloss | 2,5 | 1-10 | < 20 |
| HPMC | Biopolymer | Gas/water barrier/ emulsifier | 1 | 0,1-5 | 0-10 |
| Carnauba wax | Wax | Coating, water barrier, | 10 | 5-15 | 1-20 |
| Candelila wax | Wax | Coating, water barrier, | 10 | 5-15 | 1-20 |
| Beeswax | Wax | Coating, water barrier, | 10 | 5-15 | 1-20 |

Further examples of additives are listed in Table 2 below (amounts of >10 % w/v are not according to the invention):

**Table 2: list of possible food grade additives for use in the composition of the invention.**

| Product | Category | Function in the compositi on | Amounts are w/v based on the volume of the composition | | |
|---|---|---|---|---|---|
| | | | Exemplary concentrat ion (w/v %) | Preferred concentrat ion range. (w/v %) | Rang e (w/v %) |
| Alginate (require s also a crosslinker such as Ca, Mg of Al) | Biopolymer | Coating, water/gas barrier, gloss | 1 | 0,1-5 | < 10 |
| Cellulose and derivatives (CMC, MC, NaCMC) | Biopolymer | Coating, gas barrier | 1 | 0,1-5 | < 10 |
| Casinates | Biopolymer | Coating, gloss | 1 | 0,1-5 | < 10 |
| Lignin | Biopolymer | Coating, gas barrier | 1 | 0,1-5 | < 10 |
| Lecithin | Biopolymer | Coating, gas barrier | 1 | 0,1-5 | < 10 |
| Zein | Biopolymer | Coating, gas barrier | 1 | 0,1-5 | < 10 |
| Gellan | Biopolymer | Coating, gas barrier | 1 | 0,1-5 | < 10 |
| Chitin/chitosan | Biopolymer | Coating, water barrier, polycatio n | 1 | 0,1-5 | < 10 |
| Starches | Biopolymer | Coating, gas barrier | 1 | 0,1-5 | < 10 |
| Ascorbin, Citric, | Antioxidan ten | Antioxidant, | 1 | 0,1-5 | < 10 |
| Tocopherol | | antimicrobial s | | | |
| Ascorbine, citric, malic, tartaric, sorbic, lactic, acetic acid | Acids | Antimicrobial , pH regulator , Sequestra nt | 1 | 0,1-5 | 0,1-5 |
| Natural extracts | Algae, Plants, Flowers, essential oils | Antimicrobial , hormones, nutrients | 1 | 0,1-5 | 0,1-5 |
| Minerals (e.g. calcium) | Salts | Nutrients | 1 | 0,1-5 | 0,1-5 |
| Suikers (agar, gelatine) | Biopolymer | Coating | | | |
| Polydimethylsilo xane | | Anti-foam | | | |
| Sorbate, benzoene, sulfite etc. and salts thereof | | Preservat ion | | | |
| VAE (vinyl acetate ethylene) | Polymer | Gas / water barrier | 5 | 1-10 | 0,1-20 |
| PVOH (70-98%) (polyvinyl alcohol) | Polymer | Gas / water barrier / gloss | 5 | 1-10 | 0,1-20 |
| PVA (polyvinyl alcohol) | polymer | Gas / water barrier | 5 | 1-10 | 0,1-20 |
| EVOH (ethylene vinyl alcohol) | polymer | Gas/water barrier / | 5 | 1-10 | 0,1-20 |
| | | gloss | | | |

The harvest product to be coated is suitably selected from the group of a fruit item, a vegetable, a potted plant, a flower bulb and a cut flower, preferably it is a fruit item or a vegetable item.

Fruit items can be any edible fruit items, including fruit items with a thick peel that has to be peeled off before consumption, or fruit items with a thin edible peel. Non-limiting examples of fruit items that can be coated with the composition of the invention include without limitation banana, mango, melon, citrus fruits, papayas, lychees, oranges, apples, apricots, avocados, bananas, cantaloupes, figs, guavas, kiwis, nectarines, peaches, pears, persimmons, plums, passion fruit, strawberries, blackberries and tomatoes, etc.

Examples of vegetables that can be coated with the composition of the invention include without limitation green vegetables, orange vegetables, starchy vegetables, root vegetables, peas and beans, and other vegetables, for instance celery, green beans, green peppers, snow peas, snap peas, asparagus, zucchini, broccoli, cucumbers, onions, etc.

Examples of cut flowers that can be coated with the composition of the invention include without limitation, tulips, roses, chrysanthemums, gladioli, lilies, gardenias, orchids, poinsettias, etc.

Coating fruit and vegetables with the coating according to the invention leads to prolonged shelf life and slower weight loss of said fruit or vegetable. In this respect the invention also relates to the use of the composition according to the invention, for the preparation of a post-harvest fruit or vegetable item with prolonged shelf life and slower weight loss compared to a comparable fruit or vegetable item which is not coated with said composition. With "comparable fruit or vegetable item" is meant a fruit or vegetable item of the same variety, with substantially similar size and at an equal stage in time after harvest.

Coating cut flowers with the coating according to the invention leads to prolonged vase life of said flowers. In this respect the invention also relates to the use of the composition according to the invention, for the preparation of a post-harvest cut flower with prolonged vase life when coated with said composition compared to a comparable cut flower which is not coated with said composition. With "comparable cut flower" is meant a flower of the same variety, with substantially similar size and at an equal stage after cutting.

The invention also relates to a method for coating a fresh harvest product, selected from the group of a fruit item, a vegetable and a cut flower and comprising applying post-harvest to said harvest product a composition according to the invention.

The coating emulsion can be applied by several techniques, preferably by spraying or immersion. When the coating emulsion used has a high viscosity, preferably a dilution of the emulsion is used for applying the emulsion, whereas with a polymer emulsion with a low viscosity, preferably a spraying/immersion technique is used. The coating is allowed or made to dry after being applied.

In case of a concentrated composition with low water content, the composition is diluted prior to use.

The method may result in a thickness of the coating of from 0,3 to 25 µm, preferably 1,5 to 20 µm. This can be achieved in a single coating step, for instance by immersion or spraying.

It is also possible to apply multiple coating steps, for instance in two steps. In this case the first coating step results in a primer layer and the second step in a "finishing" layer. For the sake of efficiency it is however preferred that coating is performed in a single step.

The emulsion of the coating composition according to the invention may be applied one or more times directly on the fruit items. Preferably the emulsion is applied once.

The emulsion of the coating composition according to the invention is applied directly on the harvest products and is edible. The composition is applied at least on the skin of the harvest products, although applying the composition also on stems/ and or broken surfaces thereof will not be detrimental to gloss and weight stability.

The following examples are meant to illustrate and not to limit the invention.

### Examples

### Example 1 - exemplary compositions.

The following compositions according to the invention were prepared for testing their effect as a coating on fruit, vegetables and flowers:
Composition A:
   - 5,0 % GMS (1-Stearoyl-rac-glycerol, SIGMA)
   - 3,0 % Oleic acid,
   - 5,0 % Ammonia
   - 0,1 % glycerol
   - Rest water
Composition B:
   - 5,0 % of a mixture of 60 glycerol monostearate(1- and 2-glycerol monostearate):40 GMP (1- and 2-glycerol monopalmitate (Radiamuls 2918K))
   - 3,0 % Oleic acid,
   - 5,0 % Ammonia
   - 0,1 % glycerol
   - Rest water
Composition C:
   - 1,0 % GMS
   - 0,6 % Oleic acid,
   - 5,0 % Ammonia
   - Rest water
Composition D:
   - 2,5 % GMS
   - 1,5% Oleic acid,
   - 5,0 % Ammonia
   - Rest water
Composition E:
   - 3,5 % GMS
   - 2,0 % Oleic acid
   - 5,0 % Ammonia
   - Rest water
Composition F:
   - 5 % of a mixture of 60 GMS(1- and 2-glycerol monostearate):40 GMP (1- and 2-glycerol monopalmitate (Radiamuls 2918K))
   - 2,5% Shellac
   - 3,0 % Oleic acid
   - 5,0 % Ammonia
   - 0,1 % glycerol
   - Rest water
Composition G:
   - 2,5% of a mixture of 60 GMS(1- and 2-glycerol monostearate):40 GMP (1- and 2-glycerol monopalmitate (Radiamuls 2918K))
   - 2,5% GML (1-Lauroyl-rac-glycerol, Radiamuls MG 2549K )
   - 3,0 % Oleic acid
   - 5,0 % Ammonia
   - 0,1 % glycerol
   - Rest water

All percentages are weight percentages based on the volume of the composition.

### Example 2 - avocados

In this example Composition A was applied onto avocados to test the effect of the coating on weight loss, and the formation of fungal infections. Coatings were applied by dipping avocados of known weight in one of the above compositions, followed by drying at room temperature. Control avocados were not coated. In the tests below the avocados were incubated in a cooling room at 6°C at a relative humidity of 85%, which closely resembles the conditions during cooled transport and storage of avocados.

### 2.1 Weight loss

After two weeks of incubation in a cooling room the average weight loss in 24 hour of 20 avocados was determined. Weight loss was determined as the average loss of weight in % of the average weight of the produce at the start of said 24 hr incubation. The results are shown in Table 3.

**Table 3: average weight loss over 24 hr of 20 avocados.**

| Weight loss of avocados | Uncoated (Control) | Coated (with Composition A) |
|---|---|---|
| Weight loss rate (%) | 1,09 | 0,59 |
| Ratio weight loss control/ weight loss composition A | | **1,85** |

Table 1 shows that avocados coated with composition A have a marked reduction in weight loss. The ratio of the average mass loss rate of uncoated avocado to the average mass loss rate of the corresponding coated avocado was 1,85. This rate can be used as a measure for reduction in mass loss rate and is unprecedented in the prior art.

### 2.2 Fungal infections

The coated and uncoated avocados were also tested for fungal infections. In this experiment 20 avocados were assessed visually for the presence of fungal infection on the outer surface during a period of 18 days. The results are shown in Table 4 below.

**Table 4: number of infected coated and uncoated avocados.**

| Number of infected avocados | Uncoated (Control) | Coated (with Composition A) |
|---|---|---|
| Day 7 | 0 | 0 |
| Day 14 | 4 | 1 |
| Day 18 | 6 | 3 |

Table 4 shows that avocados coated with composition A have a marked reduction in loss of avocados due to fungal infection, namely of up to 75 % after 14 days of storage.

### Example 3 - bananas

In this example Composition A was applied onto bananas to test the effect of the coating on weight loss. Coatings were applied by dipping bananas of known weight in composition A, followed by drying at room temperature. Control bananas were not coated. In the tests below the bananas were incubated in a cooling room at 6°C at a relative humidity of 85%, which closely resembles the conditions during cooled transport and storage of bananas.

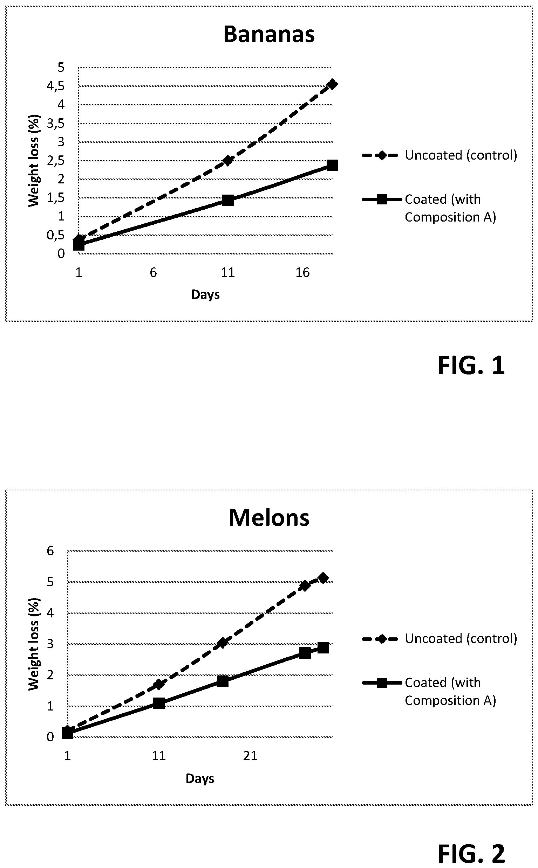

The weight of a number of bananas was determined after 1, 11 and 18 days of incubation. The weight loss was determined as percentage of the original weight of the produce. The original weight of the uncoated bananas was 778 grams. The starting weight of the coated bananas was 861 grams. The results are shown in Table 5 and Fig. 1.

**Table 5: Weight loss of bananas in time.**

| Days of incubation | Weight loss of bananas (%) | Uncoated (Control) | Coated (with Composition A) |
|---|---|---|---|
| 1 | | 0,37 | 0,24 |
| 11 | | 2,5 | 1,43 |
| 18 | | 4,55 | 2,37 |

Table 5 and Fig. 1 show that bananas coated with a composition according to the invention show a marked reduction in weight loss in time compared to uncoated bananas. The coated bananas therefore have a longer shelf life.

### Example 4 - melons - composition A

In this example Composition A was applied onto melons to test the effect of the coating on weight loss. Coatings were applied by dipping melons of known weight in composition A, followed by drying at room temperature. Control melons were not coated. In the tests below the melons were incubated at 18-20°C at a relative humidity of 50%.

The weight of a number of melons was determined at various time points after 1 to 29 days of incubation. The weight loss was determined as percentage of the original weight of the produce. The results are shown in Table 6 and Fig. 2.

**Table 6: Weight loss of melons in time.**

| Days of incubation | Weight loss of melons (%) | Uncoated (control) | Coated (with Composition A) |
|---|---|---|---|
| 1 | | 0,21 | 0,13 |
| 11 | | 1,70 | 1,09 |
| 18 | | 3,04 | 1,80 |
| 27 | | 4,88 | 2,71 |
| 29 | | 5,13 | 2,88 |

Table 6 and Fig. 2 show that melons coated with a composition according to the invention show a marked reduction in weight loss in time compared to uncoated melons. The coated melons therefore have a longer shelf life.

### Example 5 - cucumbers

In this example Composition B was applied onto cucumbers to test the effect of the coating on weight loss. Coatings were applied by dipping cucumbers of known weight in composition B, followed by drying at room temperature. Control cucumbers were not coated. Cucumbers covered in plastic were also tested.

In the tests below the cucumbers were incubated at 20°C at a relative humidity of 50%.

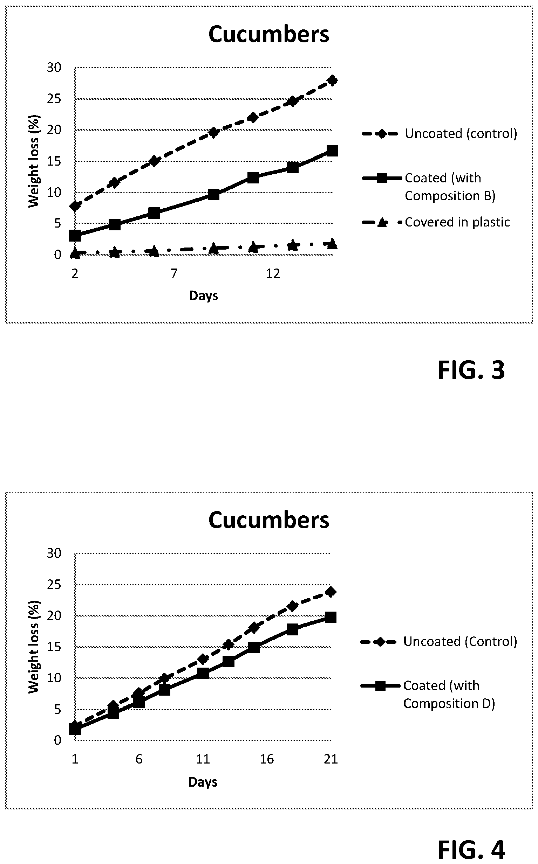

The weight of a number of cucumbers was determined at various time points after 1 to 15 days of incubation. The weight loss was determined as percentage of the original weight of the produce. The results are shown in Table 7 and Fig. 3.

**Table 7: Weight loss of cucumbers in time (composition B).**

| Days of incubation | Weight loss of cucumbers (%) | Uncoated (control) | Coated (with Composition B) | Covered in plastic |
|---|---|---|---|---|
| 2 | | 7,76 | 3,05 | 0,33 |
| 4 | | 11,56 | 4,80 | 0,48 |
| 6 | | 14,99 | 6,65 | 0,62 |
| 9 | | 19,57 | 9,65 | 1,08 |
| 11 | | 22,00 | 12,38 | 1,27 |
| 13 | | 24,61 | 14,01 | 1,58 |
| 15 | | 27,94 | 16,64 | 1,81 |

The same experiment was carried out on cucumbers but in this case coated with Composition D. The weight of a number of cucumbers was determined at various time points after 1 to 21 days of incubation. The weight loss was determined as percentage of the original weight of the produce. The results are shown in Table 8 and Fig. 4.

**Table 8: Weight loss of cucumbers in time (composition D).**

| Days of incubation | Weight loss of Cucumbers (%) | Uncoated (Control) | Coated (with Composition D) |
|---|---|---|---|
| 1 | | 2,33 | 1,82 |
| 4 | | 5,53 | 4,40 |
| 6 | | 7,57 | 6,15 |
| 8 | | 9,91 | 8,12 |
| 11 | | 13,02 | 10,75 |
| 13 | | 15,37 | 12,67 |
| 15 | | 18,10 | 14,94 |
| 18 | | 21,51 | 17,80 |
| 21 | | 23,82 | 19,71 |

Tables 7 and 8 and Figs. 3 and 4 show that cucumbers coated with different compositions according to the invention show a marked reduction in weight loss in time compared to uncoated cucumbers. The coated cucumbers therefore have a longer shelf life.

### Example 6 - Apples

In this example Composition C was applied onto apples to test the effect of the coating on weight loss. Coatings were applied by dipping apples of known weight in composition C, followed by drying at room temperature. Control apples were not coated.

In the tests below the apples were incubated at 18-22°C at a relative humidity of 50%.

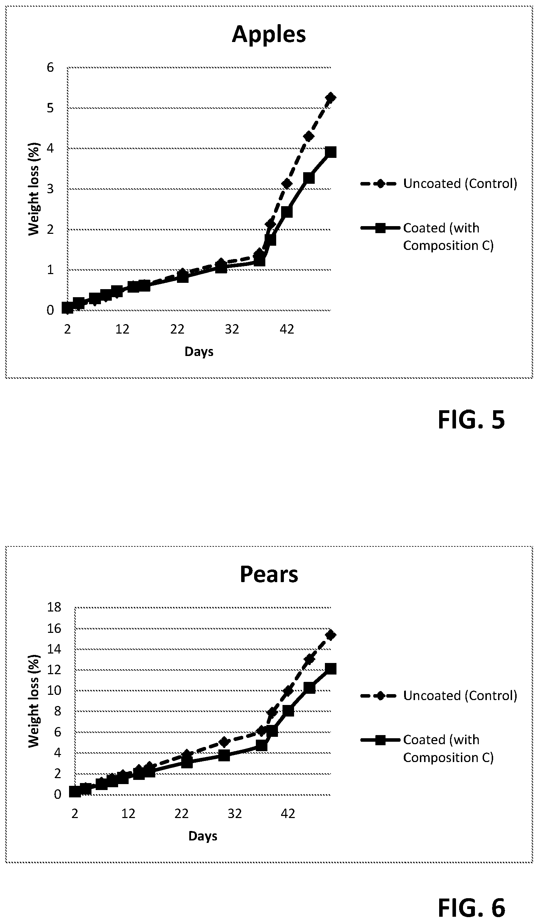

The weight of 5 apples was determined at various time points after 1 to 50 days of incubation. The weight loss was determined as percentage of the original weight of the produce. The weight loss percentages of the 5 apples were averaged and the results are shown in Table 9 and Fig. 5.

**Table 9: Weight loss of apples in time (composition C).**

| Days of incubation | Weight loss of Apples (%) | Uncoated (Control) | Coated (with Composition C) |
|---|---|---|---|
| 2 | | 0,04 | 0,07 |
| 4 | | 0,13 | 0,18 |
| 7 | | 0,24 | 0,29 |
| 9 | | 0,34 | 0,38 |
| 11 | | 0,43 | 0,47 |
| 14 | | 0,59 | 0,58 |
| 16 | | 0,62 | 0, 61 |
| 23 | | 0,91 | 0,82 |
| 30 | | 1,16 | 1,06 |
| 37 | | 1,41 | 1,23 |
| 39 | | 2,13 | 1,74 |
| 42 | | 3,13 | 2,44 |
| 46 | | 4,30 | 3,27 |
| 50 | | 5,25 | 3,91 |

Table 9 and Fig. 5 show that apples coated with different compositions according to the invention show a marked reduction in weight loss in time compared to uncoated apples. The coated apples therefore have a longer shelf life. After more than 5 weeks of incubation the most significant differences are observed.

### Example 7 - Pears

In this example Composition C was applied onto pears to test the effect of the coating on weight loss. Coatings were applied by dipping pears of known weight in composition C, followed by drying at room temperature. Control pears were not coated.

In the tests below the pears were incubated at 18-22°C at a relative humidity of 50%.

The weight of 4 pears was determined at various time points after 1 to 50 days of incubation. The weight loss was determined as percentage of the original weight of the produce. The weight loss percentages of the 4 pears were averaged and the results are shown in Table 10 and Fig. 6.

**Table 10 and Fig. 6 show that pears coated with different compositions according to the invention show a marked reduction in weight loss in time compared to uncoated pears. The coated pears therefore have a longer shelf life. After more than 5 weeks of incubation the most significant differences are observed.**

| Weight loss of pears (%) | Uncoated (Control) | Coated (with Composition C) |
|---|---|---|
| Day 2 | 0,34 | 0,29 |
| Day 4 | 0,63 | 0,57 |
| Day 7 | 1,16 | 1,00 |
| Day 9 | 1,52 | 1,30 |
| Day 11 | 1,85 | 1, 60 |
| Day 14 | 2,36 | 1,99 |
| Day 16 | 2,64 | 2,22 |
| Day 23 | 3,84 | 3,09 |
| Day 30 | 5,05 | 3,77 |
| Day 37 | 6,13 | 4,73 |
| Day 39 | 7,86 | 6,14 |
| Day 42 | 9,96 | 8,05 |
| Day 46 | 13,02 | 10,27 |
| Day 50 | 15,37 | 12,12 |

### Example 8 - strawberries

In this example Compositions D and E were applied onto strawberries to test the effect of the coating on weight loss. Coatings were applied by dipping strawberries of known weight (between 190-230 gram) in one of the above compositions, followed by drying at room temperature. Control strawberries were not coated. In the tests below the avocados were incubated for two days at 18-22°C at a relative humidity of 50%. The average weight loss in 24 hour of the strawberries was determined as follows. Weight loss was determined as the average loss of weight in % of the average weight of the produce at the start of said two day incubation. The average weight loss rate in 24 hours was calculated from that value. The results are shown in Table 11.

**Table 11: average weight loss over 24 hr strawberries.**

| | Uncoated (control) | Coated (with Composition D) | Coated (with Composition E) |
|---|---|---|---|
| Average weight loss of strawberries in 24 hrs (%) | 4,7 | 2,90 | 2,04 |

Table 11 shows that strawberries coated with different compositions according to the invention show a marked reduction in weight loss in time compared to uncoated strawberries. The coated strawberries therefore have a longer shelf life. Strawberries coated with a composition according to the invention show an unprecedented reduction in weight loss compared to strawberries coated with a composition according to the prior art.

### Example 9 - melons - compositions B, F, G

In this example Composition B, F or G was applied onto melons to test the effect of the coating on weight loss. Coatings were applied by dipping melons of known weight in composition B, F or G followed by drying at room temperature. Control melons were not coated. In the tests below the melons were incubated at 6-7°C at a relative humidity of 80+ %.

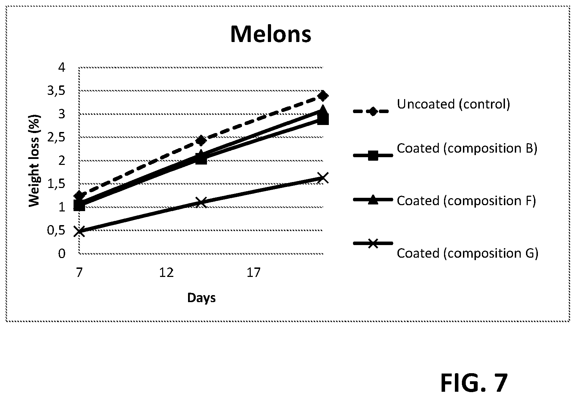

The weight of a number of melons was determined at various time points after 1 to 21 days of incubation. The weight loss was determined as percentage of the original weight of the produce. The results are shown in Table 12 and Fig. 7.

**Table 12: Weight loss of melons in time.**

| Days of incubati on | Weigh t loss of melon s (%) | Uncoate d (contro 1) | Coated (with Compositi on B) | Coated (with Compositi on F) | Coated (with Compositi on G) |
|---|---|---|---|---|---|
| 7 | | 1,24 | 1,04 | 1, 08 | 0,48 |
| 14 | | 2,43 | 2,04 | 2,12 | 1,10 |
| 21 | | 3,39 | 2,89 | 3, 08 | 1, 63 |

Table 12 and Fig. 7 show that melons coated with various compositions according to the invention show a marked reduction in weight loss in time compared to uncoated melons. The coated melons therefore have a longer shelf life. The strongest effect is obtained with composition F which contains a combination of glyceryl monostearate and glyceryl monolaurate.

**Example 10: oranges** In this example composition H or I was applied onto oranges (Valencia oranges from South Africa) to test the effect of the inclusion of an anti-foam agent on weight loss. Coatings were applied by dipping oranges of known weight in composition H or I followed by drying at room temperature. Control oranges were not coated. In the tests below the oranges were incubated at 19°C at a relative humidity of 58 %.
Composition H:
   - 5,0 % of a mixture of 60 glycerol monostearate (1- and 2-glycerol monostearate):40 GMP (1- and 2-glycerol monopalmitate (Radiamuls 2918K))
   - 3,0 % Oleic acid (Radiacid 0163),
   - 4,0 % Ammonia
   - 1,0 % Capmul 471 Capmul 471 are mono- and diglycerides with a caproic (C6) fatty acid content of <1%, caprylic (C8) fatty acid content of 55-60%, capric (10) fatty acid content of 40-45% and lauric (C12) fatty acid content of <2% (mol percentages)
   - Rest water
Composition I:
   - 5,0 % of a mixture of 60 glycerol monostearate (1- and 2-glycerol monostearate):40 GMP (1- and 2-glycerol monopalmitate (Radiamuls 2918K))
   - 3,0 % Oleic acid (Radiacid 0163),
   - 2,0 % Ammonia
   - 1,0 % Capmul 471
   - 0,25% KCl
   - 0,5% polydimethylsiloxane (PDMS, Calsil)
   - Rest water

All percentages are weight percentages based on the volume of the composition.

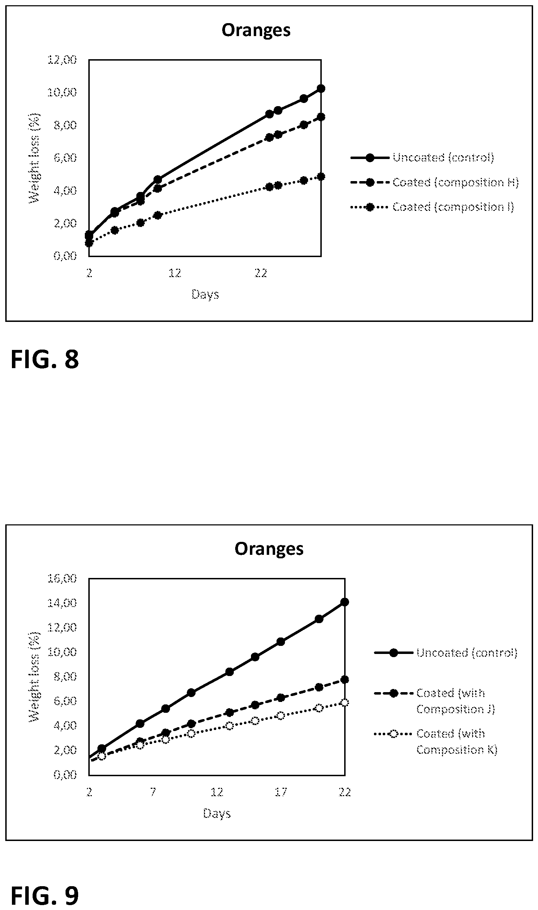

The weight of a number of oranges was determined at various time points after 2 to 29 days of incubation. The weight loss was determined as percentage of the original weight of the produce. The results are shown in Table 13 and Fig. 8.

**Table 13: Weight loss of oranges in time.**

| Days of incubation | Weight loss of oranges(%) | Uncoated (control) | Coated (with Composition H) | Coated (with Composition I) |
|---|---|---|---|---|
| 2 | | 1,21 | 1,33 | 0,79 |
| 5 | | 2,73 | 2,63 | 1,58 |
| 8 | | 3,67 | 3,36 | 2,04 |
| 10 | | 4, 68 | 4,14 | 2,50 |
| 23 | | 8, 69 | 7,26 | 4,23 |
| 24 | | 8,91 | 7,44 | 4,33 |
| 27 | | 9,64 | 8,03 | 4,63 |
| 29 | | 10,25 | 8,52 | 4,86 |

Table 13 and Fig. 8 show that oranges coated with various compositions according to the invention show a marked reduction in weight loss in time compared to uncoated oranges and therefore have a longer shelf life. The strongest effect in this test is obtained with composition I which contains an anti-foam agent, showing the advantageous effect of anti-foam agents on weight loss of fruits.

Also compositions were tested with Capmul 471 as the sole source of monoglyceride and diglyceride in the composition, using concentrations of 0,5 and 0,1% w/v of the emulsion. The weight of a number of oranges was determined at various time points after 2 to 29 days of incubation. The weight loss was determined as percentage of the original weight of the produce. The results are shown in Table 14 below.

**Table 14: Influence of short chained mono/diglycerides on weight loss of oranges.**

| Days of incubation | Weight loss of oranges(%) | Uncoated (control) | 0,1% Capmul 471 | 0,5% Capmul 471 |
|---|---|---|---|---|
| 3 | | 2,38 | 2,22 | 2,41 |
| 7 | | 5,66 | 4,89 | 4,96 |
| 10 | | 7,65 | 6,63 | 7,21 |
| 14 | | 10,17 | 8,80 | 9,74 |
| 17 | | 12,28 | 10,62 | 11,71 |
| 20 | | 14,86 | 12,99 | 14,27 |

The results in Table 14, show that also using short chained mono/diglycerides result in a decrease of weight loss of oranges albeit to a lower extent than mono/diglycerides with longer chains.

### Example 11: oranges

In this example Composition J or K was applied onto oranges (Salustiana oranges from Spain) to test the effect of the inclusion of palmitic acid on weight loss. Coatings were applied by dipping oranges of known weight in composition J or K followed by drying at room temperature. Control oranges were not coated. In the tests below the oranges were incubated at 19°C at a relative humidity of 60 %.
Composition J:
   - 5,0 % of a mixture of 60 glycerol monostearate (1- and 2-glycerol monostearate):40 GMP (1- and 2-glycerol monopalmitate (Radiamuls 2918K))
   - 3,0 % Oleic acid (Radiacid 0163),
   - 4,0 % Ammonia
   - 0,5% KCl
   - 0,5% polydimethylsiloxane (PDMS, Calsil FG20)
   - Rest water.
Composition K:
   - 5,0 % of a mixture of 60 glycerol monostearate (1- and 2-glycerol monostearate):40 GMP (1- and 2-glycerol monopalmitate (Radiamuls 2918K))
   - 1,2 % Oleic acid (Radiacid 0163),
   - 1,8% palmitic acid
   - 4,0 % Ammonia
   - 0,5% KCl
   - 0,5% polydimethylsiloxane (PDMS, Calsil FG20)
   - Rest water

All percentages are weight percentages based on the volume of the composition.

The weight of a number of oranges was determined at various time points after 1 to 22 days of incubation. The weight loss was determined as percentage of the original weight of the produce. The results are shown in Table 15 and Fig. 9.

**Table 15 - weight loss of oranges**

| Days of incubation | Weight loss of oranges(%) | Uncoated (control) | Coated (with Composition J) | Coated (with Composition K) |
|---|---|---|---|---|
| 1 | | 0,70 | 0,58 | 0, 61 |
| 3 | | 2,15 | 1,53 | 1,53 |
| 6 | | 4,19 | 2,71 | 2,43 |
| 8 | | 5,40 | 3,42 | 2,88 |
| 10 | | 6,70 | 4,16 | 3,37 |
| 13 | | 8,40 | 5,09 | 4,00 |
| 15 | | 9, 61 | 5,70 | 4,41 |
| 17 | | 10,86 | 6,29 | 4,83 |
| 20 | | 12,71 | 7,14 | 5,45 |
| 22 | | 14,09 | 7,76 | 5,89 |

Table 15 and Fig. 9 show that oranges coated with various compositions according to the invention show a marked reduction in weight loss in time compared to uncoated oranges and therefore have a longer shelf life. The strongest effect in this test is obtained with composition K which contains palmitic acid as a fatty acid in addition to oleic acid. Moreover, the inventors observed higher stability of the composition of palmitic acid was added.

### Example 12: oranges

In this example Composition L or K (as described under example 11) was applied onto oranges (Navelina oranges from Spain) to test the effect of the inclusion of lecithin on weight loss. The inventors have found that the addition of lecithin allows to concentrate the composition to a higher extent. Coatings were applied by dipping oranges of known weight in composition L or K followed by drying at room temperature. Control oranges were not coated. In the tests below the oranges were incubated at 19°C at a relative humidity of 60 %.
Composition L:
- 5,0 % of a mixture of 60 glycerol monostearate (1- and 2-glycerol monostearate):40 GMP (1- and 2-glycerol monopalmitate (Radiamuls 2918K))
- 2,0 % Oleic acid (Radiacid 0163),
- 1,333 % Ammonia
- 0,167% KCl
- 0,167% polydimethylsiloxane (PDMS, Calsil FGA20)
- 0,167% lecithin (granules, sunflower origin)
- Rest water

All percentages are weight percentages based on the volume of the composition. Composition L was obtained by dilution of a 3x concentrated stable composition.

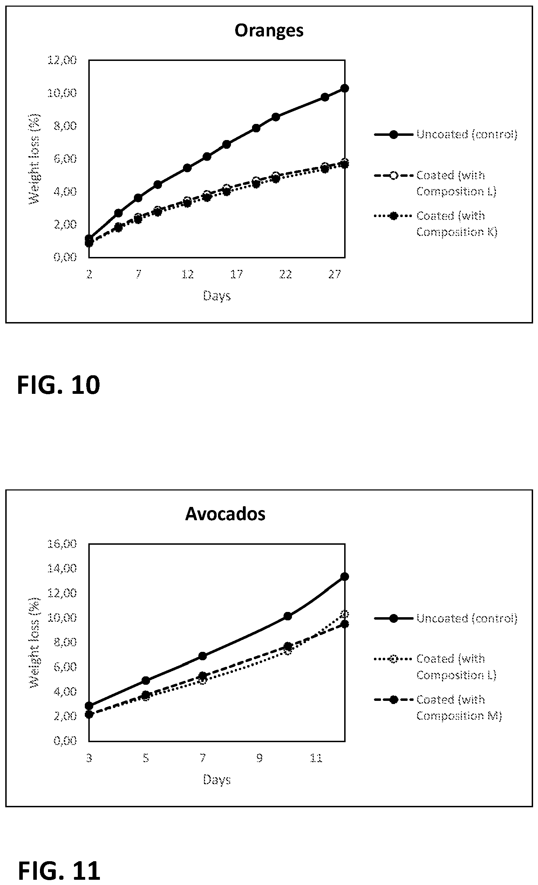

The weight of a number of oranges was determined at various time points after 2 to 22 days of incubation. The weight loss was determined as percentage of the original weight of the produce. The results are shown in Table 16 and Fig. 10.

**Table 16 - weight loss of oranges**

| Days of incubation | Weight loss of oranges(%) | Uncoated (control) | Coated (with Composition L) | Coated (with Composition K) |
|---|---|---|---|---|
| 2 | | 1,15 | 0,90 | 0,87 |
| 5 | | 2,69 | 1,88 | 1,80 |
| 7 | | 3,63 | 2,44 | 2,31 |
| 9 | | 4,44 | 2,88 | 2,74 |
| 12 | | 5,45 | 3,45 | 3,28 |
| 14 | | 6,15 | 3,84 | 3,64 |
| 16 | | 6,88 | 4,21 | 3,99 |
| 19 | | 7,87 | 4, 67 | 4,46 |
| 21 | | 8,55 | 4,98 | 4,78 |
| 26 | | 9,76 | 5,54 | 5,38 |
| 26 | | 10,30 | 5,80 | 5,65 |

Table 16 and Fig. 10 show that oranges coated with compositions K and L show a marked reduction in weight loss in time compared to uncoated oranges and therefore have a longer shelf life. There is not a significant effect between composition L, which contains lecithin but no palmitic acid, and composition K, which contains palmitic acid as a fatty acid in addition to oleic acid but no lecithin. The addition of lecithin to allow concentrating of the composition does not have a limiting effect on shelf life. In fact, it appears that the addition of lecithin has an advantageous effect on shelf life of fruit comparable to the addition of palmitic acid as shown in Example 11.

### Example 13 - avocado

In this example Composition L (as described under example 12) or M was applied onto avocados (Hass from Spain) to test the effect of alternative alkaline agents on weight loss. Coatings were applied by dipping avocados of known weight in composition L or M followed by drying at room temperature. Control avocados were not coated. In the tests below the avocados were incubated at 21°C at a relative humidity of 54 %.
Composition M:
- 5,0 % of a mixture of 60 glycerol monostearate (1- and 2-glycerol monostearate):40 GMP (1- and 2-glycerol monopalmitate (Radiamuls 2918K))
- 2,50 % Oleic acid (Radiacid 0163),
- 0,333 % Ammonia
- 1,0% KOH
- 0,813% citric acid (for regulating the pH to 9,8)
- 0,167% polydimethylsiloxane (PDMS, Calsil FGA20)
- 0,167% lecithin(granules, sunflower origin)
- Rest water

All percentages are weight percentages based on the volume of the composition. Both compositions L and M were obtained by dilution of a 3x concentrated stable composition.

The weight of a number of avocados was determined at various time points after 3 to 12 days of incubation. The weight loss was determined as percentage of the original weight of the produce. The results are shown in Table 17 and Fig. 11.

**Table 17 - weight loss of avocados.**

| Days of incubation | Weight loss of avocados(%) | Uncoated (control) | Coated (with Composition L) | Coated (with Composition M) |
|---|---|---|---|---|
| 3 | | 2,86 | 2,17 | 2,16 |
| 5 | | 4,92 | 3,58 | 3,75 |
| 7 | | 6,89 | 4,92 | 5,30 |
| 10 | | 10,14 | 7,31 | 7,69 |
| 12 | | 13,34 | 10,31 | 9,50 |

Table 17 and Fig. 11 show that avocados coated with compositions L and M show a marked reduction in weight loss in time compared to uncoated avocados and therefore have a longer shelf life. There is not a significant effect between composition L and composition M, in which part of the ammonia is replaced with KOH as alkaline agent.

## Claims

1. Edible composition for coating fresh harvest products, wherein the composition is in the form of a aqueous emulsion, comprising:
a monoglyceride, wherein said monoglyceride has a chain length of 12 to 20 carbon atoms;
one or more fatty acids having a chain length of 12 to 21 carbon atoms; and
one or more alkaline agents;
wherein the composition comprises said monoglyceride in an amount of 1-10% w/v of the emulsion; said fatty acid in an amount of 1-5% w/v of the emulsion; said alkaline agent in an amount of 0,10-10% w/v of the emulsion, wherein the percentage of further additives than said monoglyceride, said fatty acid(s) and alkaline agents and water does not exceed 10 % w/v of the emulsion.

2. Composition according to claim 1, wherein said monoglyceride has chains selected from the group of laurate chain, oleate chain, palmitate chain and stearate chain.

3. Composition according to any of the previous claims, wherein said one or more fatty acids comprise one or more C18 fatty acids, such as C18, C18:1, C18:2, C18:3, for instance oleic acid, or a mixture thereof.

4. Composition according to claim 3, wherein said one or more fatty acids comprise oleic acid.

5. Composition according to any of the previous claims, wherein said one or more alkaline agents are obtained by dissolving one or more compounds of the group consisting of NaOH, KOH, morpholine, ammonium hydroxide ammonium(bi)carbonate, ammonia, sodium bicarbonate, potassium bicarbonate, ammonium chloride and/or preferably wherein the alkaline agent is capable of evaporating after application of the composition onto the fresh harvest product.

6. Composition according to any of the previous claims, which further comprises one or more spacing agent, wherein said spacing agent is a polyol, such as a polyol selected from the group of glycerol, sorbitol, propylene glycol, polyethylene glycol or mixtures thereof, preferably glycerol.

7. Composition according to any of the previous claims, which further comprises lecithin, and/or ammonium phosphatides, and/or an anti-foam agent.

8. Composition according to any of the previous claims, which is free of organic solvents or which comprises organic solvent in a percentage of less than 5 % w/v of the emulsion.

9. Composition according to any of the previous claims, which comprises glycerol monostearate in an amount of 1-10% w/v of the emulsion; oleic acid as a fatty acid in an amount of 1-5% w/v of the emulsion; an alkaline agent in an amount of 0,1-10% w/v of the emulsion, the balance being water.

10. Composition according to claim 9, which comprises glycerol monostearate in an amount of 1-10% w/v of the emulsion; oleic acid as a fatty acid in an amount of 1-5% w/v of the emulsion; ammonia as an alkaline agent in an amount of 0,1-10% w/v of the emulsion, the balance being water.

11. Composition according to claim 10, which comprises glycerol monostearate in an amount of 1-10% w/v of the emulsion; oleic acid as fatty acid in an amount of 1-5% w/v of the emulsion; glycerol as spacing agent in an amount of 0,01-10% w/v of the emulsion; ammonia as alkaline agent in an amount of 0,1-10% w/v of the emulsion, the balance being water.

12. Composition according to any of the previous claims, comprising ammonia in an amount of 1-10 % w/v of the emulsion, or comprising ammonia in combination with NaOH or KOH in a combined amount of 1-10 % w/v of the emulsion.

13. Method for coating a fresh harvest product, preferably selected from the group of a fruit item, a vegetable, a flower bulb, a potted plant and a cut flower, and comprising applying post-harvest to said harvest product a composition according to any of the claims 1 to 12.

14. Use of the composition according to any of the claims 1 to 12, for the preparation of a post-harvest fruit or vegetable item with prolonged shelf life and slow weight loss.

15. Use of the composition according to any of the claims 1 to 12, for the preparation of a post-harvest cut flower or potted plant with prolonged vase life.

## Patentansprüche

1. Essbare Zusammensetzung zum Beschichten von frischen Ernteprodukten, wobei die Zusammensetzung in Form einer wässrigen Emulsion vorliegt, umfassend:
ein Monoglycerid, wobei das Monoglycerid eine Kettenlänge von 12 bis 20 Kohlenstoffatomen aufweist;
eine oder mehrere Fettsäuren mit einer Kettenlänge von 12 bis 21 Kohlenstoffatomen; und
ein oder mehrere alkalische Mittel;
wobei die Zusammensetzung das Monoglycerid in einer Menge von 1-10 Gew.-%/Vol. der Emulsion, die Fettsäure in einer Menge von 1-5 % Gew.-%/Vol. der Emulsion und das alkalische Mittel in einer Menge von 0,10-10 Gew.-%/Vol. der Emulsion aufweist, wobei der Prozentsatz weiterer Additive als das Monoglycerid, die Fettsäure(n) und die alkalischen Mittel und Wasser 10 Gew.-%/Vol. der Emulsion nicht übersteigt.

2. Zusammensetzung gemäß Anspruch 1, wobei das Monoglycerid Ketten aufweist, die aus der Gruppe von Lauratkette, Oleatkette, Palmitatkette und Stearatkette ausgewählt sind.

3. Zusammensetzung gemäß einem der vorhergehenden Ansprüche, wobei die eine oder mehreren Fettsäuren eine oder mehrere C18-Fettsäuren, wie C18, C18:1, C18:2, C18:3, beispielsweise Ölsäure, oder eine Mischung davon aufweisen.

4. Zusammensetzung gemäß Anspruch 3, wobei die eine oder mehreren Fettsäuren Ölsäure aufweisen.

5. Zusammensetzung gemäß einem der vorhergehenden Ansprüche, wobei das eine oder die mehreren alkalischen Mittel durch Auflösen einer oder mehrerer Verbindungen aus der Gruppe bestehend aus NaOH, KOH, Morpholin, Ammoniumhydroxid, Ammonium(bi)carbonat, Ammoniak, Natriumbicarbonat, Kaliumbicarbonat, Ammoniumchlorid erhalten wird/werden und/oder vorzugsweise wobei das alkalische Mittel in der Lage ist, nach dem Auftragen der Zusammensetzung auf das frische Ernteprodukt zu verdampfen.

6. Zusammensetzung gemäß einem der vorhergehenden Ansprüche, die weiterhin ein oder mehrere Abstandsmittel enthält, wobei das Abstandsmittel ein Polyol ist, wie ein Polyol, ausgewählt aus der Gruppe von Glycerin, Sorbit, Propylenglykol, Polyethylenglykol oder Mischungen davon, vorzugsweise Glycerin.

7. Zusammensetzung gemäß einem der vorhergehenden Ansprüche, die weiterhin Lecithin und/oder Ammoniumphosphatide und/oder ein Anti-Schaummittel aufweist.

8. Zusammensetzung gemäß einem der vorhergehenden Ansprüche, die frei von organischen Lösungsmitteln ist oder die organische Lösungsmittel in einem Prozentsatz von weniger als 5 Gew.-%/Vol. der Emulsion aufweist.

9. Zusammensetzung gemäß einem der vorhergehenden Ansprüche, die Glycerinmonostearat in einer Menge von 1-10 Gew.-%/Vol. der Emulsion, Ölsäure als Fettsäure in einer Menge von 1-5 Gew.-%/Vol. der Emulsion, ein alkalisches Mittel in einer Menge von 0,1-10 Gew.-% /Vol. der Emulsion aufweist, wobei der Rest Wasser ist.

10. Zusammensetzung gemäß Anspruch 9, die Glycerinmonostearat in einer Menge von 1-10 Gew.-%/Vol. der Emulsion, Ölsäure als Fettsäure in einer Menge von 1-5 Gew.-%/Vol. der Emulsion, Ammoniak als alkalisches Mittel in einer Menge von 0,1-10 Gew.-%/Vol. der Emulsion aufweist, wobei der Rest Wasser ist.

11. Zusammensetzung gemäß Anspruch 10, die Glycerinmonostearat in einer Menge von 1-10 Gew.-%/Vol. der Emulsion, Ölsäure als Fettsäure in einer Menge von 1-5 Gew.-%/Vol. der Emulsion, Glycerin als Abstandsmittel in einer Menge von 0,01-10 Gew.-%/Vol. der Emulsion, Ammoniak als alkalisches Mittel in einer Menge von 0,1-10 Gew.-%/ Vol. der Emulsion aufweist, wobei der Rest Wasser ist.

12. Zusammensetzung gemäß einem der vorhergehenden Ansprüche, die Ammoniak in einer Menge von 1-10 Gew.-%/Vol. der Emulsion oder Ammoniak in Kombination mit NaOH oder KOH in einer kombinierten Menge von 1-10 Gew.-%/Vol. der Emulsion aufweist.

13. Verfahren zum Beschichten eines frischen Ernteprodukts, vorzugsweise ausgewählt aus der Gruppe einer Frucht, eines Gemüses, einer Blumenzwiebel, einer Topfpflanze und einer Schnittblume, und bei dem nach der Ernte eine Zusammensetzung gemäß einem der Ansprüche 1 bis 12 auf das Ernteprodukt aufgebracht wird.

14. Verwendung der Zusammensetzung gemäß einem der Ansprüche 1 bis 12 zur Herstellung eines Obst- oder Gemüseprodukts nach der Ernte mit verlängerter Haltbarkeit und langsamem Gewichtsverlust.

15. Verwendung der Zusammensetzung gemäß einem der Ansprüche 1 bis 12 zur Herstellung einer Schnittblume oder Topfpflanze nach der Ernte mit verlängerter Haltbarkeit in der Vase.

## Revendications

1. Composition comestible pour enrober des produits fraîchement récoltés, laquelle composition est sous la forme d'une émulsion aqueuse, comprenant :
un monoglycéride, lequel monoglycéride a une longueur de chaîne de 12 à 20 atomes de carbone ;
un ou plusieurs acides gras ayant une longueur de chaîne de 12 à 21 atomes de carbone ; et
un ou plusieurs agents alcalins ;
laquelle composition comprend ledit monoglycéride en une quantité de 1 à 10 % p/v de l'émulsion ; ledit acide gras en une quantité de 1 à 5 % p/v de l'émulsion ; ledit agent alcalin en une quantité de 0,10 à 10 % p/v de l'émulsion, dans laquelle le pourcentage d'additifs autres que ledit monoglycéride, ledit ou lesdits acides gras et agents alcalins, et l'eau, ne dépasse pas 10 % p/v de l'émulsion.

2. Composition selon la revendication 1, dans laquelle ledit monoglycéride a des chaînes choisies dans le groupe consistant en une chaîne laurate, une chaîne oléate, une chaîne palmitate et une chaîne stéarate.

3. Composition selon l'une quelconque des revendications précédentes, dans laquelle lesdits un ou plusieurs acides gras comprennent un ou plusieurs acides gras en C18, tels qu'en C18, C18:1, C18:2, C18:3, par exemple l'acide oléique, ou un mélange de ceux-ci.

4. Composition selon la revendication 3, dans laquelle lesdits un ou plusieurs acides gras comprennent de l'acide oléique.

5. Composition selon l'une quelconque des revendications précédentes, dans laquelle lesdits un ou plusieurs agents alcalins sont obtenus par dissolution d'un ou plusieurs composés du groupe consistant en NaOH, KOH, la morpholine, l'hydroxyde d'ammonium, le (bi)carbonate d'ammonium, l'ammoniac, le bicarbonate de sodium, le bicarbonate de potassium, le chlorure d'ammonium et/ou de préférence dans laquelle l'agent alcalin est capable de s'évaporer après l'application de la composition sur le produit fraîchement récolté.

6. Composition selon l'une quelconque des revendications précédentes, qui comprend en outre un ou plusieurs agents d'espacement, dans laquelle ledit agent d'espacement est un polyol, tel qu'un polyol choisi dans le groupe consistant en le glycérol, le sorbitol, le propylèneglycol, le polyéthylèneglycol et leurs mélanges, de préférence le glycérol.

7. Composition selon l'une quelconque des revendications précédentes, qui comprend en outre de la lécithine et/ou des phosphatures d'ammonium et/ou un agent anti-mousse.

8. Composition selon l'une quelconque des revendications précédentes, qui est exempt de solvants organiques ou qui comprend un solvant organique en un pourcentage inférieur à 5 % p/v de l'émulsion.

9. Composition selon l'une quelconque des revendications précédentes, qui comprend du monostéarate de glycérol en une quantité de 1 à 10 % p/v d'émulsion ; de l'acide oléique en tant qu'acide gras en une quantité de 1 à 5 % p/v de l'émulsion ; un agent alcalin en une quantité de 0,1 à 10 % p/v de l'émulsion ; le reste étant de l'eau.

10. Composition selon la revendication 9, qui comprend du monostéarate de glycérol en une quantité de 1 à 10 % p/v d'émulsion ; de l'acide oléique en tant qu'acide gras en une quantité de 1 à 5 % p/v de l'émulsion ; de l'ammoniac en tant qu'agent alcalin en une quantité de 0,1 à 10 % p/v de l'émulsion, le reste étant de l'eau.

11. Composition selon la revendication 10, qui comprend du monostéarate de glycérol en une quantité de 1 à 10 % p/v d'émulsion ; de l'acide oléique en tant qu'acide gras en une quantité de 1 à 5 % p/v de l'émulsion ; du glycérol en tant qu'agent d'espacement en une quantité de 0,01 à 10 % p/v de l'émulsion ; de l'ammoniac en tant qu'agent alcalin en une quantité de 0,1 à 10 % p/v de l'émulsion, le reste étant de l'eau.

12. Composition selon l'une quelconque des revendications précédentes, comprenant de l'ammoniac en une quantité de 1 à 10 % p/v de l'émulsion, ou comprenant de l'ammoniac en combinaison avec du NaOH du KOH en une quantité combinée de 1 à 10 % p/v de l'émulsion.

13. Procédé pour enrober un produit fraîchement récolté, de préférence choisi dans le groupe consistant en un fruit, un légume, un bulbe de fleur, une plante en pot et une fleur coupée, comprenant l'application après récolte, sur ledit produit récolté, d'une composition selon l'une quelconque des revendications 1 à 12.

14. Utilisation de la composition selon l'une quelconque des revendications 1 à 12 pour la préparation d'un fruit ou légume après récolte ayant une durée de conservation étendue et une faible perte de poids.

15. Utilisation de la composition selon l'une quelconque des revendications 1 à 12 pour la préparation d'une fleur coupée ou d'une plante en pot après récolte ayant une tenue en vase prolongée.
